(19) Europäisches Patentamt
European Patent Office
Office européen des brevets

(11) **EP 2 617 028 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(21) Anmeldenummer: **11760700.2**

(22) Anmeldetag: **08.09.2011**

(51) Int Cl.:
**G10K 15/02** *(2006.01)*

(86) Internationale Anmeldenummer:
**PCT/EP2011/004536**

(87) Internationale Veröffentlichungsnummer:
**WO 2012/034669 (22.03.2012 Gazette 2012/12)**

(54) **FAHRZEUG MIT ELEKTROANTRIEB**

VEHICLE HAVING AN ELECTRIC DRIVE

VÉHICULE AVEC ENTRAÎNEMENT ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2010 DE 102010045996**

(43) Veröffentlichungstag der Anmeldung:
**24.07.2013 Patentblatt 2013/30**

(73) Patentinhaber: **Volkswagen Aktiengesellschaft 38436 Wolfsburg (DE)**

(72) Erfinder:
• **MESCHKE, Jens 38533 Rethen (DE)**
• **KERN, Marcus 38165 Lehre (DE)**

(56) Entgegenhaltungen:
EP-A1- 0 025 537          EP-A1- 1 865 494
EP-A2- 1 927 512          DE-A1-102009 041 975
US-A1- 2009 080 672

• **"Missing fundamental", , 1 April 2009 (2009-04-01), Retrieved from the Internet: URL:https://en.wikipedia.org/w/index.php?title=Missing_fundamental&oldid=281076383 [retrieved on 2018-06-12]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Fahrzeug mit Elektroantrieb und mit einem Schallwandler.

Die DE 10 2009 058 152.9 beschreibt ein Fahrzeug mit Elektroantrieb und mit einem Schallwandler zur Ausgabe eines künstlichen Fahrzeuggeräusches, wobei das Fahrzeug einen Klanggenerator zur Ausgabe oder Verstärkung des künstlichen Fahrzeuggeräusches bei Erkennung eines Fußgängers vor dem Fahrzeug, zur Unterdrückung des künstlichen Fahrzeuggeräusches bei Stillstand des Fahrzeuges, insbesondere vor einer Ampel, und/oder zur Unterdrückung des künstlichen Fahrzeuggeräusches auf Straßen eines vorgegebenen Typs umfasst.

Die US 2009/0806672 A1 offenbart eine Einrichtung zur Ausgabe eines akustischen Signals. Dabei umfasst die Einrichtung ein Speichermedium, in dem Signalmuster abgespeichert sind.

Die Internetseite www.heise.de/autos/artikel/Toyota-kuenstliches-Motorgeraeusch-fuer-Elektroautos-1067863.html offenbart die automatische Variation künstlicher Motorengeräusche abhängig von der Geschwindigkeit und der aktuellen Beschleunigung des Fahrzeuges. Abgestrahlt wird das künstliche Motorengeräusch in Fahrtrichtung nach vorn von einem wasserdichten Schallwandlersystem unter dem Kühlergrill.

Fahrzeuge mit Elektroantrieb sind z. B. aus der DE 43 09 621 A1 und der DE 10 2004 040 228 A1 offenbart.

Es ist Aufgabe der Erfindung, ein verbessertes Fahrzeug mit Elektroantrieb anzugeben. Insbesondere sollen Nachteile aus dem Stand der Technik vermieden werden.

Vorgenannte Aufgabe wird durch ein Fahrzeug mit Elektroantrieb und mit einem Schallwandler gelöst, wobei das Fahrzeug einen Klanggenerator zur gleichzeitigen Ausgabe

- eines ersten Geräusches mit zunehmender Frequenz und abnehmender Lautstärke, eines zweiten Geräusches mit zunehmender Frequenz und zunehmender Lautstärke und zumindest eines dritten Geräusches mit zunehmender Frequenz mittels des Schallwandlers, insbesondere bei zunehmender Drehzahl des Elektroantriebs, und/oder
- eines ersten Geräusches mit abnehmender Frequenz und abnehmender Lautstärke, eines zweiten Geräusches mit abnehmender Frequenz und zunehmender Lautstärke und zumindest eines dritten Geräusches mit abnehmender Frequenz mittels des Schallwandlers, insbesondere bei abnehmender Drehzahl des Elektroantriebs,

umfasst.

Ein Fahrzeug mit Elektroantrieb im Sinne der Erfindung ist insbesondere ein Fahrzeug mit einem elektromotorischen Antrieb, der zum Vortrieb des Fahrzeuges vorgesehen ist. Ein Fahrzeug mit Elektroantrieb im Sinne der Erfindung kann ein sogenanntes reines Elektrofahrzeug oder auch ein sogenanntes Hybridfahrzeug sein. Ein Hybridfahrzeug im Sinne der Erfindung umfasst insbesondere sowohl einen elektromotorischen Antrieb, der zum Vortrieb des Fahrzeuges vorgesehen ist, als auch einen Verbrennungsmotor. Ein Fahrzeug mit Elektroantrieb im Sinne der Erfindung ist z. B. ein aus der DE 43 09 621 A1 oder der DE 10 2004 040 228 A1 bekanntes Fahrzeug.

Ein Geräusch im Sinne der Erfindung ist insbesondere ein permanent gehaltenes akustisches Signal. Es ist insbesondere vorgesehen, dass sich eine zunehmende oder abfallende Frequenz kontinuierlich verändert. Mehrere Geräusche im Sinne der Erfindung formen insbesondere ein Shepard-Risset-Glissando. Ein Geräusch im Sinne der Erfindung umfasst insbesondere einen Grundton (Sinuston). Ein Geräusch im Sinne der Erfindung umfasst insbesondere einen Grundton und Harmonische des Grundtons. Ein Geräusch im Sinne der Erfindung umfasst insbesondere einen virtuellen Grundton umfassend Harmonische des dem virtuellen Grundton entsprechenden Grundtons, nicht aber den Grundton selbst. Ein Geräusch im Sinne der Erfindung umfasst insbesondere einen virtuellen Grundton, umfassend Harmonische des dem virtuellen Grundton entsprechenden Grundtons, nicht aber den Grundton selbst und zumindest nicht die 1. Harmonische. Ein Geräusch im Sinne der Erfindung umfasst insbesondere einen virtuellen Grundton, umfassend Harmonische des dem virtuellen Grundton entsprechenden Grundtons, nicht aber den Grundton selbst und zumindest nicht die 1. und 2. Harmonische. Ein Geräusch im Sinne der Erfindung umfasst insbesondere einen virtuellen Grundton, umfassend Harmonische des dem virtuellen Grundton entsprechenden Grundtons, nicht aber den Grundton selbst und zumindest nicht die 1., 2. und 3. Harmonische. Ein Geräusch im Sinne der Erfindung umfasst insbesondere einen virtuellen Grundton, umfassend Harmonische des dem virtuellen Grundton entsprechenden Grundtons, nicht aber den Grundton selbst und zumindest nicht die 1., 2., 3. und 4. Harmonische. Ein Geräusch im Sinne der Erfindung besteht insbesondere aus einem Grundton (Sinuston). Ein Geräusch im Sinne der Erfindung besteht insbesondere aus einem Grundton und Harmonischen des Grundtons. Ein Geräusch im Sinne der Erfindung besteht insbesondere aus einem virtuellen Grundton, umfassend Harmonische des dem virtuellen Grundton entsprechenden Grundtons, nicht aber den Grundton selbst. Ein Geräusch im Sinne der Erfindung besteht insbesondere aus einem virtuellen Grundton, umfassend Harmonische des dem virtuellen Grundton entsprechenden Grundtons, nicht aber den Grundton selbst und zumindest nicht die 1. Harmonische. Ein Geräusch im Sinne der Erfindung besteht insbesondere aus einem virtuellen Grundton, umfassend Harmonische des dem virtuellen Grundton entsprechenden Grundtons, nicht aber den Grundton selbst und zumindest nicht die 1. und 2. Harmonische.

Ein Geräusch im Sinne der Erfindung besteht insbesondere aus einem virtuellen Grundton, umfassend Harmonische des dem virtuellen Grundton entsprechenden Grundtons, nicht aber den Grundton selbst und zumindest nicht die 1., 2. und 3. Harmonische. Ein Geräusch im Sinne der Erfindung besteht insbesondere aus einem virtuellen Grundton, umfassend Harmonische des dem virtuellen Grundton entsprechenden Grundtons, nicht aber den Grundton selbst und zumindest nicht die 1., 2., 3. und 4. Harmonische.

Ein Schallwandler im Sinne der Erfindung ist eine Vorrichtung zur Umwandlung elektrischer Signale in Schall. Als Schallwandler dient erfindungsgemäß ein Lautsprecher oder ein Körperschallwandler. Aber auch andere bekannte Schallwandler können eingesetzt werden.

In weiterhin vorteilhafter Ausgestaltung der Erfindung ist (bei zunehmender Frequenz) die Frequenz oder Tonhöhe des ersten Geräusches, insbesondere zumindest um eine Oktave, höher als die Frequenz oder Tonhöhe des dritten Geräusches. In weiterhin vorteilhafter Ausgestaltung der Erfindung ist (bei zunehmender Frequenz) die Frequenz oder Tonhöhe des dritten Geräusches, insbesondere zumindest um eine Oktave, höher als die Frequenz oder Tonhöhe des zweiten Geräusches.

In weiterhin vorteilhafter Ausgestaltung der Erfindung ist (bei zunehmender Frequenz) die Frequenz des ersten Geräusches das 3-, 5-, 7- oder 9-fache der Frequenz des dritten Geräusches. In weiterhin vorteilhafter Ausgestaltung der Erfindung ist (bei zunehmender Frequenz) die Frequenz des dritten Geräusches das 3-, 5-, 7- oder 9-fache der Frequenz des zweiten Geräusches.

In einer weiteren Ausgestaltung der Erfindung ist (bei zunehmender Frequenz) die Frequenz des ersten Geräusches ein ganzzahliges oder nicht-ganzzahliges Vielfaches der Frequenz des dritten Geräusches. In weiterhin vorteilhafter Ausgestaltung der Erfindung ist (bei zunehmender Frequenz) die Frequenz des dritten Geräusches ein ganzzahliges oder nicht-ganzzahliges Vielfaches der Frequenz des zweiten Geräusches.

In weiterhin vorteilhafter Ausgestaltung der Erfindung entspricht (bei zunehmender Frequenz) der Verlauf der Frequenz des zweiten Geräusches phasenverzögert dem Verlauf der Frequenz des dritten Geräusches. In weiterhin vorteilhafter Ausgestaltung der Erfindung entspricht (bei zunehmender Frequenz) der Verlauf der Frequenz des dritten Geräusches phasenverzögert dem Verlauf der Frequenz des ersten Geräusches.

In weiterhin vorteilhafter Ausgestaltung der Erfindung ist (bei abnehmender Frequenz) die Frequenz oder Tonhöhe des ersten Geräusches, insbesondere zumindest um eine Oktave, tiefer als die Frequenz oder Tonhöhe des dritten Geräusches. In weiterhin vorteilhafter Ausgestaltung der Erfindung ist (bei abnehmender Frequenz) die Frequenz oder Tonhöhe des dritten Geräusches, insbesondere zumindest um eine Oktave, tiefer als die Frequenz oder Tonhöhe des zweiten Geräusches.

In weiterhin vorteilhafter Ausgestaltung der Erfindung ist (bei abnehmender Frequenz) die Frequenz des zweiten Geräusches das 3-, 5-, 7- oder 9-fache der Frequenz des dritten Geräusches. In weiterhin vorteilhafter Ausgestaltung der Erfindung ist (bei abnehmender Frequenz) die Frequenz des dritten Geräusches das 3-, 5-, 7- oder 9-fache der Frequenz des ersten Geräusches.

In einer weiteren Ausgestaltung der Erfindung ist (bei abnehmender Frequenz) die Frequenz des zweiten Geräusches ein ganzzahliges oder nicht-ganzzahliges Vielfaches der Frequenz des dritten Geräusches. In weiterhin vorteilhafter Ausgestaltung der Erfindung ist (bei abnehmender Frequenz) die Frequenz des dritten Geräusches ein ganzzahliges oder nicht-ganzzahliges Vielfaches der Frequenz des ersten Geräusches.

In weiterhin vorteilhafter Ausgestaltung der Erfindung entspricht (bei abnehmender Frequenz) der Verlauf der Frequenz des ersten Geräusches phasenverzögert dem Verlauf der Frequenz des dritten Geräusches. In weiterhin vorteilhafter Ausgestaltung der Erfindung entspricht (bei abnehmender Frequenz) der Verlauf der Frequenz des dritten Geräusches phasenverzögert dem Verlauf der Frequenz des zweiten Geräusches.

In weiterhin vorteilhafter Ausgestaltung der Erfindung folgt die Abnahme der Lautstärke des ersten Geräusches dem abfallenden Teil einer glockenartigen Kurve. In weiterhin vorteilhafter Ausgestaltung der Erfindung folgt die Zunahme der Lautstärke des zweiten Geräusches dem ansteigenden Teil einer glockenartigen Kurve.

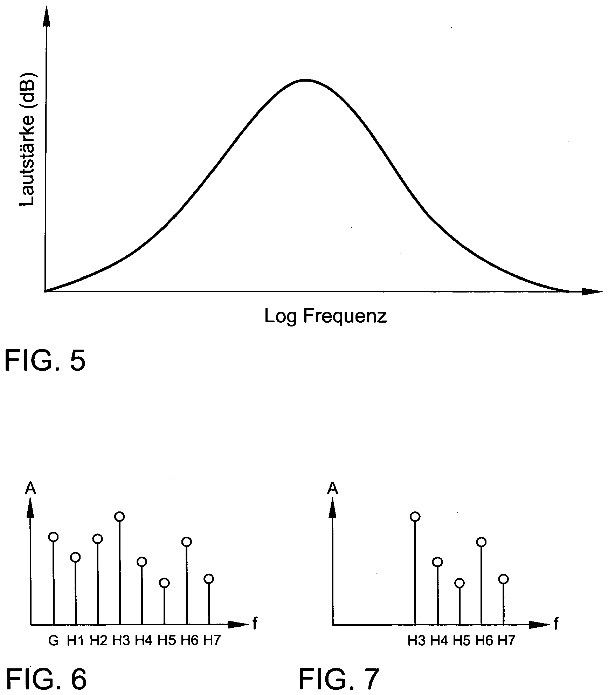

Die Begriffe "glockenartige Kurve" und "glockenartige Funktion" sollen im Sinne der Erfindung insbesondere synonym verstanden werden. Eine glockenartige Kurve im Sinne der Erfindung ist insbesondere eine nach unten geöffnete Kurve, die bei null beginnt und bei null endet. Die Abszisse einer glockenartigen Kurve im Sinne der Erfindung ist insbesondere der Logarithmus der Frequenz. Die Ordinate einer glockenartigen Kurve im Sinne der Erfindung ist insbesondere der Logarithmus der Lautstärke. Die Ordinate einer glockenartigen Kurve im Sinne der Erfindung ist insbesondere die Lautstärke in dB. Ein besonders geeignetes Beispiel für eine glockenartige Kurve im Sinne der Erfindung zeigt Fig. 5. Eine glockenartige Kurve im Sinne der Erfindung ist insbesondere eine Glockenkurve. Eine glockenartige Kurve im Sinne der Erfindung ist insbesondere einer gaußschen Glockenkurve ähnlich, nähert sich jedoch nicht asymptotisch null, sondern beginnt bei null und endet bei null (siehe analog Fig. 5). Die Begriffe "Glockenkurve" und "Glockenfunktion" sollen im Sinne der Erfindung insbesondere synonym verstanden werden.

In weiterhin vorteilhafter Ausgestaltung der Erfindung folgt die Lautstärke des ersten Geräusches einer ersten frequenzabhängigen glockenartigen Kurve bzw. glockenartigen Funktion. In weiterhin vorteilhafter Ausgestaltung der Erfindung folgt die Lautstärke des zweiten Geräusches einer zweiten frequenzabhängigen glockenartigen Kurve bzw. glockenartigen Funktion. In weiterhin vorteilhafter Ausgestaltung der Erfindung folgt die Lautstärke des dritten Geräusches einer dritten frequenzabhängigen glockenartigen Kurve bzw. glockenartigen Funktion. In weiterhin vorteilhafter Ausgestaltung der Erfindung ist die erste frequenzabhängige glockenartigen Kurve bzw. glockenartigen Funktion gleich der zweiten frequenzabhängigen glockenartigen Kurve bzw. glockenartigen Funktion. In weiterhin vorteilhafter Ausgestaltung der Erfindung ist die erste frequenzabhängige glockenartigen Kurve bzw. glockenartigen Funktion gleich der dritten frequenzabhängigen glockenartigen Kurve bzw. glockenartigen Funktion. In weiterhin vorteilhafter Ausgestaltung der Erfindung ist die zweite frequenzabhängige glockenartigen Kurve bzw. glockenartigen Funktion gleich der dritten frequenzabhängigen glockenartigen Kurve bzw. glockenartigen Funktion.

In weiterhin vorteilhafter Ausgestaltung der Erfindung ist die Form der glockenartigen Kurve in Abhängigkeit der akustischen Eigenschaften des Innenraums des Fahrzeugs gestaltet. Ein Innenraum des Fahrzeugs im Sinne der Erfindung ist insbesondere ein für Passagiere vorgesehener Innenraum des Fahrzeugs. Ein Innenraum des Fahrzeugs im Sinne der Erfindung ist insbesondere der Innenraum des Fahrzeugs, der für einen Fahrer vorgesehen ist.

Vorgenannte Aufgabe wird - insbesondere in Verbindung mit einem oder mehreren der vorgenannten Merkmalen - zudem durch ein Verfahren zum Betrieb eines Fahrzeuges mit Elektroantrieb gelöst, das einen Schallwandler aufweist, wobei mittels des Schallwandlers,

- insbesondere bei zunehmender Drehzahl des Elektroantriebs, gleichzeitig ein erstes Geräusch mit zunehmender Frequenz und abnehmender Lautstärke, ein zweites Geräusch mit zunehmender Frequenz und zunehmender Lautstärke und zumindest ein drittes Geräusch mit zunehmender Frequenz oder,
- insbesondere bei abnehmender Drehzahl des Elektroantriebs, gleichzeitig ein erstes Geräusch mit abnehmender Frequenz und abnehmender Lautstärke, ein zweites Geräusch mit abnehmender Frequenz und zunehmender Lautstärke und zumindest ein drittes Geräusch mit abnehmender Frequenz

erzeugt bzw. ausgegeben werden.

In weiterhin vorteilhafter Ausgestaltung der Erfindung ist (bei zunehmender Frequenz) die Frequenz oder Tonhöhe des ersten Geräusches, insbesondere zumindest um eine Oktave, höher als die Frequenz oder Tonhöhe des dritten Geräusches. In weiterhin vorteilhafter Ausgestaltung der Erfindung ist (bei zunehmender Frequenz) die Frequenz oder Tonhöhe des dritten Geräusches, insbesondere zumindest um eine Oktave, höher als die Frequenz oder Tonhöhe des zweiten Geräusches.

sches.

In weiterhin vorteilhafter Ausgestaltung der Erfindung ist (bei zunehmender Frequenz) die Frequenz des ersten Geräusches das 3-, 5-, 7- oder 9-fache der Frequenz des dritten Geräusches. In weiterhin vorteilhafter Ausgestaltung der Erfindung ist (bei zunehmender Frequenz) die Frequenz des dritten Geräusches das 3-, 5-, 7- oder 9-fache der Frequenz des zweiten Geräusches.

In einer weiteren Ausgestaltung der Erfindung ist (bei zunehmender Frequenz) die Frequenz des ersten Geräusches ein ganzzahliges oder nicht-ganzzahliges Vielfaches der Frequenz des dritten Geräusches. In weiterhin vorteilhafter Ausgestaltung der Erfindung ist (bei zunehmender Frequenz) die Frequenz des dritten Geräusches ein ganzzahliges oder nicht-ganzzahliges Vielfaches der Frequenz oder Tonhöhe des zweiten Geräusches.

In weiterhin vorteilhafter Ausgestaltung der Erfindung entspricht (bei zunehmender Frequenz) der Verlauf der Frequenz des zweiten Geräusches phasenverzögert dem Verlauf der Frequenz des dritten Geräusches. In weiterhin vorteilhafter Ausgestaltung der Erfindung entspricht (bei zunehmender Frequenz) der Verlauf der Frequenz des dritten Geräusches phasenverzögert dem Verlauf der Frequenz des ersten Geräusches.

In weiterhin vorteilhafter Ausgestaltung der Erfindung ist (bei abnehmender Frequenz) die Frequenz oder Tonhöhe des ersten Geräusches, insbesondere zumindest um eine Oktave, tiefer als die Frequenz oder Tonhöhe des dritten Geräusches. In weiterhin vorteilhafter Ausgestaltung der Erfindung ist (bei abnehmender Frequenz) die Frequenz oder Tonhöhe des dritten Geräusches, insbesondere zumindest um eine Oktave, tiefer als die Frequenz oder Tonhöhe des zweiten Geräusches.

In weiterhin vorteilhafter Ausgestaltung der Erfindung ist (bei abnehmender Frequenz) die Frequenz des zweiten Geräusches das 3-, 5-, 7- oder 9-fache der Frequenz des dritten Geräusches. In weiterhin vorteilhafter Ausgestaltung der Erfindung ist (bei abnehmender Frequenz) die Frequenz des dritten Geräusches das 3-, 5-, 7- oder 9-fache der Frequenz des ersten Geräusches.

In einer weiteren Ausgestaltung der Erfindung ist (bei abnehmender Frequenz) die Frequenz des zweiten Geräusches ein ganzzahliges oder nicht-ganzzahliges Vielfaches der Frequenz des dritten Geräusches. In weiterhin vorteilhafter Ausgestaltung der Erfindung ist (bei abnehmender Frequenz) die Frequenz des dritten Geräusches ein ganzzahliges oder nicht-ganzzahliges Vielfaches der Frequenz oder Tonhöhe des ersten Geräusches.

In weiterhin vorteilhafter Ausgestaltung der Erfindung entspricht (bei abnehmender Frequenz) der Verlauf der Frequenz des ersten Geräusches phasenverzögert dem Verlauf der Frequenz des dritten Geräusches. In weiterhin vorteilhafter Ausgestaltung der Erfindung entspricht (bei abnehmender Frequenz) der Verlauf der Frequenz des dritten Geräusches phasenverzögert dem Verlauf der Frequenz des zweiten Geräusches.

In weiterhin vorteilhafter Ausgestaltung der Erfindung folgt die Abnahme der Lautstärke des ersten Geräusches dem abfallenden Teil einer glockenartigen Kurve. In weiterhin vorteilhafter Ausgestaltung der Erfindung folgt die Zunahme der Lautstärke des zweiten Geräusches dem ansteigenden Teil einer glockenartigen Kurve.

In weiterhin vorteilhafter Ausgestaltung der Erfindung ist die Form der glockenartigen Kurve in Abhängigkeit der akustischen Eigenschaften des Innenraums des Fahrzeugs gestaltet.

Vorgenannte Aufgabe wird - insbesondere in Verbindung mit einem oder mehreren der vorgenannten Merkmalen - zudem durch ein Fahrzeug mit Elektroantrieb und mit einem Schallwandler gelöst, wobei das Fahrzeug einen Klanggenerator zur gleichzeitigen Ausgabe

- eines ersten Geräusches mit zunehmender Frequenz und einer Lautstärke entsprechend einer frequenzabhängigen ersten glockenartigen Kurve und zumindest eines zweiten Geräusches mit zunehmender Frequenz und einer Lautstärke entsprechend einer frequenzabhängigen zweiten glockenartigen Kurve mittels des Schallwandler, insbesondere bei zunehmender Drehzahl des Elektroantriebs, und/oder
- eines ersten Geräusches mit abnehmender Frequenz und einer Lautstärke entsprechend einer frequenzabhängigen ersten glockenartigen Kurve und zumindest eines zweiten Geräusches mit abnehmender Frequenz und einer Lautstärke entsprechend einer frequenzabhängigen zweiten glockenartigen Kurve mittels des Schallwandler, insbesondere bei abnehmender Drehzahl des Elektroantriebs,

umfasst, wobei insbesondere vorgesehen ist, dass die Frequenz oder Tonhöhe des ersten Geräusches, insbesondere zumindest um eine Oktave, höher ist als die Frequenz oder Tonhöhe des zweiten Geräusches.

In weiterhin vorteilhafter Ausgestaltung der Erfindung ist die Frequenz des ersten Geräusches das 3-, 5-, 7- oder 9-fache der Frequenz des zweiten Geräusches. In einer weiteren Ausgestaltung der Erfindung ist die Frequenz des ersten Geräusches ein ganzzahliges oder nicht-ganzzahliges Vielfaches der Frequenz des zweiten Geräusches. In weiterhin vorteilhafter Ausgestaltung der Erfindung entspricht der Verlauf der Frequenz des zweiten Geräusches phasenverzögert dem Verlauf der Frequenz des ersten Geräusches.

In weiterhin vorteilhafter Ausgestaltung der Erfindung ist die Form der ersten glockenartigen Kurve gleich der Form der zweiten glockenartigen Kurve. In weiterhin vorteilhafter Ausgestaltung der Erfindung ist die Form der glockenartigen Kurve in Abhängigkeit der akustischen Eigenschaften des Innenraums des Fahrzeugs gestaltet.

Vorgenannte Aufgabe wird - insbesondere in Verbindung mit einem oder mehreren der vorgenannten Merkmalen - zudem durch ein Verfahren zum Betrieb eines Fahrzeuges mit Elektroantrieb gelöst, das einen Schallwandler aufweist, wobei mittels des Schallwandlers,

- insbesondere bei zunehmender Drehzahl des Elektroantriebs, gleichzeitig ein erstes Geräusch mit zunehmender Frequenz und einer Lautstärke entsprechend einer frequenzabhängigen ersten glockenartigen Kurve und zumindest ein zweites Geräusch mit zunehmender Frequenz und einer Lautstärke entsprechend einer frequenzabhängigen zweiten glockenartigen Kurve oder,
- insbesondere bei abnehmender Drehzahl des Elektroantriebs, gleichzeitig ein erstes Geräusch mit abnehmender Frequenz und einer Lautstärke entsprechend einer frequenzabhängigen ersten glockenartigen Kurve und zumindest ein zweites Geräusch mit abnehmender Frequenz und einer Lautstärke entsprechend einer frequenzabhängigen zweiten glockenartigen Kurve

erzeugt bzw. ausgegeben werden, wobei insbesondere vorgesehen ist, dass die Frequenz oder Tonhöhe des ersten Geräusches, insbesondere zumindest um eine Oktave, höher ist als die Frequenz oder Tonhöhe des zweiten Geräusches.

In weiterhin vorteilhafter Ausgestaltung der Erfindung ist die Frequenz des ersten Geräusches das 3-, 5-, 7- oder 9-fache der Frequenz des zweiten Geräusches. In einer weiteren Ausgestaltung der Erfindung ist die Frequenz des ersten Geräusches ein ganzzahliges oder nicht-ganzzahliges Vielfaches der Frequenz des zweiten Geräusches. In weiterhin vorteilhafter Ausgestaltung der Erfindung entspricht der Verlauf der Frequenz des zweiten Geräusches phasenverzögert dem Verlauf der Frequenz des ersten Geräusches.

In weiterhin vorteilhafter Ausgestaltung der Erfindung ist die Form der ersten glockenartigen Kurve gleich der Form der zweiten glockenartigen Kurve. In weiterhin vorteilhafter Ausgestaltung der Erfindung ist die Form der glockenartigen Kurve in Abhängigkeit der akustischen Eigenschaften des Innenraums des Fahrzeugs gestaltet.

Vorgenannte Aufgabe wird - insbesondere in Verbindung mit einem oder mehreren der vorgenannten Merkmalen - zudem durch ein Fahrzeug mit Elektroantrieb und mit einem Schallwandler gelöst, wobei das Fahrzeug einen Klanggenerator

- zur Ausgabe eines Geräusches, mit zunehmender Frequenz, mittels des Schallwandlers, bei zunehmender Drehzahl des Elektroantriebs, umfasst, wobei das Geräusch einen virtuellen Grundton mit Harmonischen des dem virtuellen Grundton entsprechenden Grundtons, nicht aber den Grundton selbst umfasst und/oder

- zur Ausgabe eines Geräusches, mit abnehmender Frequenz, mittels des Schallwandlers, bei abnehmender Drehzahl des Elektroantriebs, umfasst, wobei das Geräusch einen virtuellen Grundton mit Harmonischen des dem virtuellen Grundton entsprechenden Grundtons, nicht aber den Grundton selbst umfasst.

In vorteilhafter Ausgestaltung der Erfindung umfasst das Geräusch zumindest nicht die 1. Harmonische des Grundtons. In weiterhin vorteilhafter Ausgestaltung der Erfindung umfasst das Geräusch zumindest nicht die 2. Harmonische des Grundtons. In weiterhin vorteilhafter Ausgestaltung der Erfindung umfasst das Geräusch zumindest nicht die 3. Harmonische des Grundtons. In weiterhin vorteilhafter Ausgestaltung der Erfindung umfasst das Geräusch zumindest nicht die 4. Harmonische des Grundtons.

Die Erfindung erlaubt es in besonders geeigneter Weise, einen Beschleunigungsvorgang für ein Fahrzeug mit Elektroantrieb akustisch für einen Fahrer oder einen weiteren Passagier bzw. weitere Passagiere nachzubilden, wobei in besonders geeigneter Weise auch lange, insbesondere positive, Beschleunigungen nachgebildet werden können. Die Erfindung ist besonders geeignet, in Verbindung mit zunehmenden Frequenzen, für, insbesondere lange, positive Beschleunigungen. Die Erfindung dient insbesondere der akustischen Nachbildung eines Beschleunigungsvorgangs in einem Fahrzeug mit Elektroantrieb.

Weitere Vorteile und Einzelheiten ergeben sich aus der nachfolgenden Beschreibung von Ausführungsbeispielen. Dabei zeigen:

Fig. 1    ein Ausführungsbeispiel eines Fahrzeuges mit Elektroantrieb in einer funktionalen Prinzipdarstellung,

Fig. 2    ein Ausführungsbeispiel einer Shepard-Tonleiter,

Fig. 3    ein Ausführungsbeispiel für Lautstärkenverlauf der einzelnen Töne der Shepard-Tonleiter gemäß Fig. 2,

Fig. 4    ein Ausführungsbeispiel für eine glockenartige Kurve,

Fig. 5    ein besonders geeignetes Ausführungsbeispiel für eine Glockenkurve im Sinne der Erfindung,

Fig. 6    ein Ausführungsbeispiel für ein Geräusch mit einem Grundton und

Fig. 7    ein Ausführungsbeispiel eines Spektrums zur Erzeugung eines virtuellen Grundtons, ohne dass der dem virtuellen Grundton entsprechende Grundton selbst Teil des Spektrums ist.

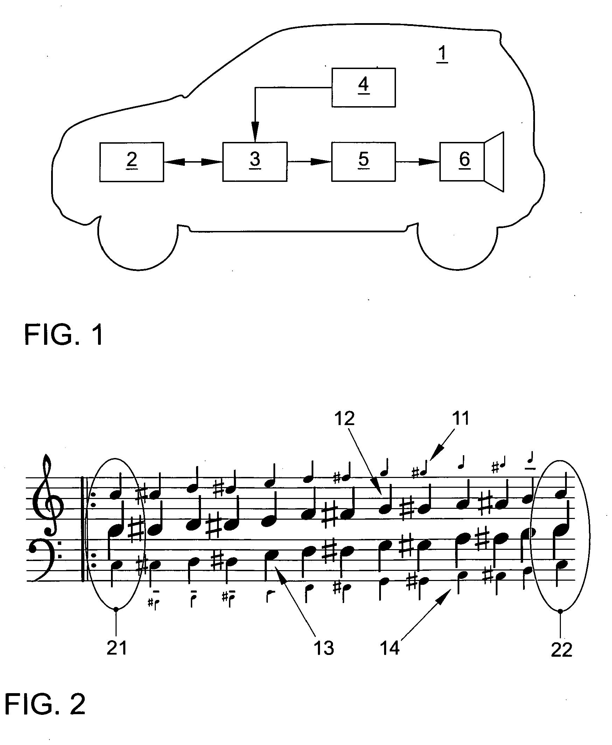

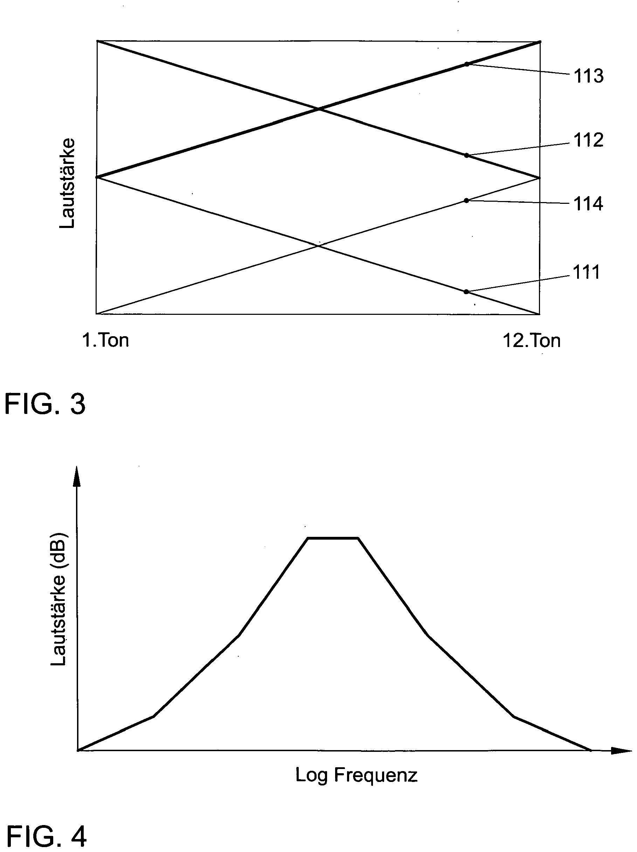

Fig. 1 zeigt ein Fahrzeug 1 mit einem Elektroantrieb 2, der über eine Motorsteuerung 3 angesteuert wird. Zur Bedienung bzw. Regelung des Elektroantriebs 2 ist ein Bedienelement 4 vorgesehen, das auf die Antriebssteuerung 3 einwirkt. Das Fahrzeug 1 umfasst zudem einen Klanggenerator 5. Mittels des Klanggenerators 5 wird eine akustische Nachbildung eines Beschleunigungsvorgangs des Fahrzeugs 1 erzeugt und mittels eines Schallwandlers 6 ausgegeben. Der Klanggenerator 5 erzeugt dabei insbesondere ein Shepard-Risset-Glissando. Es ist insbesondere vorgesehen, dass bei positiver Beschleunigung des Fahrzeugs 1 gleichzeitig ein Geräusch mit zunehmender Frequenz und abnehmender Lautstärke, ein Geräusch mit zunehmender Frequenz und zunehmender Lautstärke und ein weiteres Geräusch mit zunehmender Frequenz ausgegeben werden. Dabei ist das Geräusch mit zunehmender Frequenz und abnehmender Lautstärke um zumindest eine Oktave höher als das letztere Geräusch. Dieses wiederum ist zumindest eine Oktave höher als das Geräusch mit zunehmender Frequenz und zunehmender Lautstärke. Es ist insbesondere vorgesehen, dass die Lautstärken der Geräusche über ihre Frequenz einer glockenartigen Kurve bzw. der Glockenkurve folgen. Eine glockenartige Kurve ist zum Beispiel in Fig. 4 dargestellt. Eine besonders geeignete Glockenkurve ist in Fig. 5 dargestellt. Es ist insbesondere auch vorgesehen, dass bei negativer Beschleunigung des Fahrzeugs 1 gleichzeitig ein Geräusch mit abnehmender Frequenz und abnehmender Lautstärke, ein Geräusch mit abnehmender Frequenz und zunehmender Lautstärke und ein weiteres Geräusch mit abnehmender Frequenz ausgegeben werden. Dabei ist das Geräusch mit abnehmender Frequenz und abnehmender Lautstärke um zumindest eine Oktave tiefer als das letztere Geräusch. Dieses wiederum ist zumindest eine Oktave tiefer als das Geräusch mit abnehmender Frequenz und zunehmender Lautstärke.

Die Überlagerung mehrerer Geräusche im Sinne der Erfindung ist anhand von Fig. 2 am Beispiel diskreter Tonleitern dargestellt, wobei mit Bezugszeichen 11, 12, 13 und 14 die einzelnen Tonleitern bezeichnet sind. Die Lautstärken der Tonleitern 11, 12, 13 und 14 sind jeweils durch die Größe ihrer Noten symbolisiert. Die Lautstärken der Tonleitern 11, 12, 13 und 14 sind darüber hinaus für die (ersten) zwölf Töne in Fig. 3 dargestellt. Dabei symbolisiert die mit Bezugszeichen 111 bezeichnete Linie den Verlauf der Lautstärke der Tonleiter 11, die mit Bezugszeichen 112 bezeichnete Linie den Verlauf der Lautstärke der Tonleiter 12, die mit Bezugszeichen 113 bezeichnete Linie den Verlauf der Lautstärke der Tonleiter 13 und die mit Bezugszeichen 114 bezeichnete Linie den Verlauf der Lautstärke der Tonleiter 14. Die Tonleitern 11, 12, 13 und 14 sind derart mit ihren Lautstärken 111, 112, 113, 114 abgestimmt, dass der mit der Ellipse 21 markierte erste Akkord identisch ist mit dem mit der Ellipse 22 markierten dreizehnten Akkord.

Es ist ferner vorteilhafterweise vorgesehen, dass ein Geräusch einen virtuellen Grundton mit Harmonischen des dem virtuellen Grundton entsprechenden Grundtons, nicht aber den Grundton selbst umfasst, wie dies anhand des in Fig. 6 und Fig. 7 dargestellten Beispiels verdeutlicht ist. Fig. 6 zeigt das Spektrum eines Geräusches, wobei mit f die Frequenz der spektralen Anteile und mit A die Amplitude der spektralen Anteile bezeichnet ist. G bezeichnet den Grundton, H1 die erste Harmonische des Grundtons, H2 die zweite Harmonische des Grundtons, H3 die dritte Harmonische des Grundtons, H4 die vierte Harmonische des Grundtons, H5 die fünfte Harmonische des Grundtons, H6 die sechste Harmonische des Grundtons und H7 die siebte Harmonische des Grundtons.

Fig. 7 zeigt das Spektrum eines weiteren Geräusches, das dem in Fig. 6 dargestellten Geräusch, verringert um den Grundton G, die erste Harmonische H1 und die zweite Harmonische H2 entspricht. Die Harmonischen H3, H4, H5, H6, H7 des Geräusches gemäß Fig. 7 formen für einen Hörer den Eindruck eines virtuellen Grundtons, der dem Grundton G des Geräusches gemäß Fig. 6 entspricht. In analoger Weise werden in vorteilhafter Weise bei den mittels des Klanggenerators 5 generierten Geräuschen zumindest der Grundton G sowie ggf. die unteren Harmonischen weggelassen. Auf diese Weise ist es möglich, Beschleunigungsvorgänge, beginnend bei geringen Drehzahlen besonders geeignet nachzubilden, insbesondere wenn diese bis zu einer hohen Drehzahl erfolgen. Die Frequenzen der Grundtöne bzw. virtuellen Grundtöne der Geräusche betragen in vorteilhafter Ausgestaltung

$$\frac{n \cdot U}{60s}$$

wobei n eine natürliche Zahl und U die Drehzahl des Elektroantriebs 2 in Umdrehungen pro Minute ist.

**Patentansprüche**

1. Fahrzeug (1) mit Elektroantrieb (2) und mit einem Schallwandler (6), **dadurch gekennzeichnet, dass** das Fahrzeug (1) einen Klanggenerator (5) zur gleichzeitigen Ausgabe eines ersten Geräusches mit zunehmender Frequenz und abnehmender Lautstärke, eines zweiten Geräusches mit zunehmender Frequenz und zunehmender Lautstärke und zumindest eines dritten Geräusches mit zunehmender Frequenz mittels des Schallwandlers (6), insbesondere bei zunehmender Drehzahl des Elektroantriebs (2), umfasst.

2. Fahrzeug (1) nach Anspruch 1, **dadurch gekennzeichnet, dass** die Frequenz oder Tonhöhe des ersten Geräusches, insbesondere zumindest um eine Oktave, höher ist als die Frequenz oder Tonhöhe des dritten Geräusches.

3. Fahrzeug (1) nach Anspruch 1 oder 2, **dadurch ge-** **kennzeichnet, dass** die Frequenz oder Tonhöhe des dritten Geräusches, insbesondere zumindest um eine Oktave, höher ist als die Frequenz oder Tonhöhe des zweiten Geräusches.

4. Fahrzeug (1) nach Anspruch 1, 2 oder 3, **dadurch gekennzeichnet, dass** die Abnahme der Lautstärke des ersten Geräusches dem abfallenden Teil einer glockenartigen Kurve folgt.

5. Fahrzeug (1) nach einem der vorhergehenden Ansprüche, **dadurch gekennzeichnet, dass** die Zunahme der Lautstärke des zweiten Geräusches dem ansteigenden Teil einer glockenartigen Kurve folgt.

6. Fahrzeug (1) nach Anspruch 4 oder 5, **dadurch gekennzeichnet, dass** die Form der glockenartigen Kurve in Abhängigkeit der akustischen Eigenschaften des Innenraums des Fahrzeugs gestaltet ist.

7. Verfahren zum Betrieb eines Fahrzeuges (1) mit Elektroantrieb (2), das einen Schallwandler (6) aufweist, insbesondere Verfahren zum Betrieb eines Fahrzeuges (1) nach einem der vorhergehenden Ansprüche, **dadurch gekennzeichnet, dass** mittels des Schallwandlers (6), insbesondere bei zunehmender Drehzahl des Elektroantriebs (2), gleichzeitig ein erstes Geräusch mit zunehmender Frequenz und abnehmender Lautstärke, ein zweites Geräusch mit zunehmender Frequenz und zunehmender Lautstärke und zumindest ein drittes Geräusch mit zunehmender Frequenz erzeugt bzw. ausgegeben werden.

8. Fahrzeug (1) mit Elektroantrieb (2) und mit einem Schallwandler (6), **dadurch gekennzeichnet, dass** das Fahrzeug (1) einen Klanggenerator (5) zur gleichzeitigen Ausgabe eines ersten Geräusches mit zunehmender oder abnehmender Frequenz und einer Lautstärke entsprechend einer frequenzabhängigen ersten glockenartigen Kurve und zumindest eines zweiten Geräusches mit abnehmender oder zunehmender Frequenz und einer Lautstärke entsprechend einer frequenzabhängigen zweiten glockenartigen Kurve mittels des Schallwandler (6) umfasst.

9. Fahrzeug (1) nach Anspruch 8, **dadurch gekennzeichnet, dass** die Form der glockenartigen Kurve in Abhängigkeit der akustischen Eigenschaften des Innenraums des Fahrzeugs (1) gestaltet ist.

10. Verfahren zum Betrieb eines Fahrzeuges (1) mit Elektroantrieb (2), das einen Schallwandler (6) aufweist, insbesondere Verfahren zum Betrieb eines Fahrzeuges (1) nach einem der Ansprüche 1 bis 6 oder 8 oder 9, **dadurch gekennzeichnet, dass** mittels des Schallwandlers (6), insbesondere bei zunehmender oder abnehmender Drehzahl des Elektroantriebs (2), gleichzeitig ein erstes Geräusch mit zunehmender oder abnehmender Frequenz und einer Lautstärke entsprechend einer frequenzabhängigen ersten glockenartigen Kurve und zumindest ein zweites Geräusch mit zunehmender oder abnehmender Frequenz und einer Lautstärke entsprechend einer frequenzabhängigen zweiten glockenartigen Kurve erzeugt bzw. ausgegeben werden.

11. Fahrzeug (1) mit Elektroantrieb (2) und mit einem Schallwandler (6), **dadurch gekennzeichnet, dass** das Fahrzeug (1) einen Klanggenerator (5) zur gleichzeitigen Ausgabe eines ersten Geräusches mit abnehmender Frequenz und abnehmender Lautstärke, eines zweiten Geräusches mit abnehmender Frequenz und zunehmender Lautstärke und zumindest eines dritten Geräusches mit abnehmender Frequenz mittels des Schallwandlers (6), insbesondere bei abnehmender Drehzahl des Elektroantriebs (2), umfasst.

12. Verfahren zum Betrieb eines Fahrzeuges (1) mit Elektroantrieb (2), das einen Schallwandler (6) aufweist, insbesondere Verfahren zum Betrieb eines Fahrzeuges (1) nach Anspruch 11, **dadurch gekennzeichnet, dass** mittels des Schallwandlers (6), insbesondere bei abnehmender Drehzahl des Elektroantriebs (2), gleichzeitig ein erstes Geräusch mit abnehmender Frequenz und abnehmender Lautstärke, ein zweites Geräusch mit zunehmender oder abnehmender Frequenz und zunehmender Lautstärke und zumindest ein drittes Geräusch mit zunehmender oder abnehmender Frequenz erzeugt bzw. ausgegeben werden.


**Claims**

1. A vehicle (1) having an electric drive (2) and having a sound transducer (6), **characterized in that** the vehicle (1) comprises a sound generator (5) for simultaneously emitting a first noise having increasing frequency and decreasing loudness, a second noise having increasing frequency and increasing loudness, and at least a third noise having increasing frequency by means of the sound transducer (6), in particular during increasing rotational speed of the electric drive (2).

2. The vehicle (1) according to Claim 1, **characterized in that** the frequency or pitch of the first noise is higher in particular by an octave than the frequency or pitch of the third noise.

3. The vehicle (1) according to Claim 1 or 2, **characterized in that** the frequency or pitch of the third noise is higher in particular by an octave than the frequency or pitch of the second noise.

4. The vehicle (1) according to Claim 1, 2 or 3, **characterized in that** the decrease of the loudness of the first noise follows the falling part of the bell-like curve.

5. The vehicle (1) according to any one of the preceding claims, **characterized in that** the increase of the loudness of the second noise follows the rising part of a bell-like curve.

6. The vehicle (1) according to Claim 4 or 5, **characterized in that** the shape of the bell-like curve is formed as a function of the acoustic properties of the interior of the vehicle.

7. A method for the operation of a vehicle (1) having an electric drive (2), which has a sound transducer (6), in particular the method for the operation of a vehicle (1) according to any one of the preceding claims, **characterized in that** by means of the sound transducer (6), in particular during increasing rotational speed of the electric drive (2), a first noise with increasing frequency and decreasing loudness, a second noise having increasing frequency and increasing loudness, and at least a third noise having increasing frequency are simultaneously generated and emitted.

8. The vehicle (1) having an electric drive (2) and having a sound transducer (6), **characterized in that** the vehicle (1) comprises a sound generator (5) for simultaneously emitting a first noise having increasing or decreasing frequency and a loudness corresponding to a frequency-dependent first bell-like curve, and at least a second noise with decreasing or increasing frequency and a loudness corresponding to a frequency-dependent second bell-like curve by means of the sound transducer (6).

9. The vehicle (1) according to Claim 8, **characterized in that** the shape of the bell-like curve is formed as a function of the acoustic properties of the interior of the vehicle (1).

10. The method for the operation of a vehicle (1) having an electric drive (2), which has a sound transducer (6), in particular the method for the operation of a vehicle (1) according to any one of Claims 1 to 6 or 8 or 9, **characterized in that** by means of the sound transducer (6), in particular during increasing or decreasing rotational speed of the electric drive (2), a first noise with increasing or decreasing frequency and a loudness corresponding to a frequency-dependent first bell-like curve and at least a second noise with increasing or decreasing frequency and a loudness corresponding to a frequency-dependent second bell-like curve are simultaneously generated or emitted.

11. The vehicle (1) having an electric drive (2) and having a sound transducer (6), **characterized in that** the vehicle (1) comprises a sound generator (5) for simultaneously emitting a first noise with decreasing frequency and decreasing loudness, a second noise with decreasing frequency and increasing loudness and at least a third noise with decreasing frequency by means of a sound transducer (6), in particular during decreasing rotational speed of the electric drive (2).

12. The method for the operation of a vehicle (1) having an electric drive (2), which has a sound transducer (6), in particular the method for the operation of a vehicle (1) according to Claim 11, **characterized in that** by means of the sound transducer (6), in particular during decreasing rotational speed of the electric drive (2) a first noise with decreasing frequency and decreasing loudness, a second noise with increasing or decreasing frequency and increasing loudness and at least a third noise with increasing or decreasing frequency are simultaneously generated or emitted.

**Revendications**

1. Véhicule (1) avec entraînement électrique (2) et avec un transducteur acoustique (6), **caractérisé en ce que** le véhicule (1) comprend un générateur de sons (5) pour l'émission simultanée d'un premier bruit avec une fréquence croissante et un volume sonore décroissant, d'un deuxième bruit avec une fréquence croissante et un volume sonore croissant et d'au moins un troisième bruit avec une fréquence croissante au moyen du transducteur acoustique (6), plus particulièrement lorsque la vitesse de rotation de l'entraînement électrique (2) augmente.

2. Véhicule (1) selon la revendication 1, **caractérisé en ce que** la fréquence ou la hauteur de son du premier bruit est supérieure, plus particulièrement d'au moins une octave, à la fréquence ou la hauteur de son du troisième bruit.

3. Véhicule (1) selon la revendication 1 ou 2, **caractérisé en ce que** la fréquence ou la hauteur de son du troisième bruit est supérieure, plus particulièrement d'au moins une octave, à la fréquence ou la hauteur de son du deuxième bruit.

4. Véhicule (1) selon la revendication 1, 2 ou 3, **caractérisé en ce que** la diminution du volume sonore du premier bruit suit la partie descendante d'une courbe en forme de cloche.

5. Véhicule (1) selon l'une des revendications précédentes, **caractérisé en ce que** l'augmentation du volume sonore du deuxième bruit suit la partie ascendante d'une courbe en forme de cloche.

6. Véhicule (1) selon la revendication 4 ou 5, **caractérisé en ce que** la forme de la courbe en forme de cloche dépend des propriétés acoustiques de l'intérieur du véhicule.

7. Procédé d'exploitation d'un véhicule (1) avec entraînement électrique (2), qui comprend un transducteur acoustique (6), plus particulièrement procédé d'exploitation d'un véhicule (1) selon l'une des revendications précédentes, **caractérisé en ce que**, au moyen du transducteur acoustique (6), plus particulièrement lorsque la vitesse de rotation de l'entraînement électrique (2) augmente, un premier bruit avec une fréquence croissante et un volume sonore décroissant, un deuxième bruit avec une fréquence croissante et un volume sonore croissant et au moins un troisième bruit avec fréquence croissante sont générés ou émis simultanément.

8. Véhicule (1) avec entraînement électrique (2) et avec un transducteur acoustique (6), **caractérisé en ce que** le véhicule (1) comprend un générateur de sons (5) pour l'émission simultanée d'un premier bruit avec une fréquence croissante ou décroissante et un volume sonore selon une première courbe en forme de cloche dépendant de la fréquence, et au moins un deuxième bruit avec une fréquence décroissante ou croissante et un volume sonore selon une deuxième courbe en forme de cloche dépendant de la fréquence, au moyen du transducteur acoustique (6).

9. Véhicule (1) selon la revendication 8, **caractérisé en ce que** la forme de la courbe en forme de cloche dépend des propriétés acoustiques de l'intérieur du véhicule (1).

10. Procédé d'exploitation d'un véhicule (1) avec entraînement électrique (2), qui comprend un transducteur acoustique (6), plus particulièrement procédé d'exploitation d'un véhicule (1) selon l'une des revendications 1 à 6 ou 8 ou 9, **caractérisé en ce que**, au moyen du transducteur acoustique (6), plus particulièrement lorsque la vitesse de rotation de l'entraînement électrique (2) augmente ou diminue, un premier bruit avec une fréquence croissante ou décroissante et un volume sonore selon une première courbe en forme de cloche dépendant de la fréquence, et au moins un deuxième bruit avec une fréquence croissante ou décroissante et un volume sonore selon une deuxième courbe en forme de cloche dépendant de la fréquence sont générés ou émis simultanément.

**11.** Véhicule (1) avec entraînement électrique (2) et avec un transducteur acoustique (6), **caractérisé en ce que** le véhicule (1) comprend un générateur de sons (5) pour l'émission simultanée d'un premier bruit avec une fréquence décroissante et un volume sonore décroissant, d'un deuxième bruit avec une fréquence décroissante et un volume sonore croissant et d'au moins un troisième bruit avec une fréquence décroissante au moyen du transducteur acoustique (6), plus particulièrement lorsque la vitesse de rotation de l'entraînement électrique (2) diminue.

**12.** Procédé d'exploitation d'un véhicule (1) avec entraînement électrique (2), qui comprend un transducteur acoustique (6), plus particulièrement procédé d'exploitation d'un véhicule (1) selon la revendication 11, **caractérisé en ce que**, au moyen du transducteur acoustique (6), plus particulièrement lorsque la vitesse de rotation de l'entraînement électrique (2) diminue, un premier bruit avec une fréquence décroissante et un volume sonore décroissant, un deuxième bruit avec une fréquence croissante ou décroissante et un volume sonore croissant et au moins un troisième bruit avec une fréquence croissante ou décroissante sont générés ou émis simultanément.

FIG. 1

FIG. 2

Lautstärke

113

112

114

111

1.Ton                                          12.Ton

FIG. 3

Lautstärke (dB)

Log Frequenz

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009058152
- US 20090806672 A1
- DE 4309621 A1
- DE 102004040228 A1